# EUROPÄISCHE PATENTSCHRIFT

(11) **EP 2 233 372 B1**
(45) Veröffentlichungstag und Bekanntmachung des Hinweises auf die Patenterteilung: **07.09.2011**
(21) Anmeldenummer: 10155034.1
(22) Anmeldetag: 01.03.2010
(51) Int. Cl.: B60R 21/205

(54) **Airbag-Anordnung für ein Kraftfahrzeug und Verfahren zur Herstellung einer Airbag-Anordnung**
Airbag assembly for a motor vehicle and method for producing same
Agencement de coussin d'air pour un véhicule automobile et procédé de fabrication d'un agencement de coussin d'air

(30) Priorität: 23.03.2009 DE 102009014449
(43) Veröffentlichungstag der Anmeldung: 29.09.2010
(73) Patentinhaber: International Automotive Components Group GmbH, 47804 Krefeld (DE)
(72) Erfinder: Bergers, Helmut, 47929, Grefrath (DE); Lesnik, Siegfried, 47918, Tönisvorst (DE)
(74) Vertreter: Liesegang, Eva

(56) Entgegenhaltungen:
- EP-A2- 0 788 938
- DE-A1- 4 241 728
- DE-A1- 10 344 401
- DE-A1- 19 738 493
- FR-A1- 2 782 302
- US-A- 5 466 000
- US-B2- 6 942 243

## Beschreibung

Die Erfindung betrifft eine Airbag-Anordnung für ein Kraftfahrzeug und ein Verfahren zur Herstellung einer Airbag-Anordnung gemäß den Oberbegriffen der Patentansprüche 1 und 12. Solche Airbag-Anordnungen sind aus einer Vielzahl von Druckschriften bekannt, beispielsweise aus DE 195 16 230 C2; DE 10 2006 054 590 B3; EP 0 428 935 B1 und EP 0 741 062 B1.

Die bekannten Airbag-Anordnungen, die in der Regel als ein Frontal- oder Seitenaufprallschutz in einem Kraftfahrzeug eingesetzt werden, weisen ein Airbag-Aufprallpolster und zugehörige Betriebseinrichtungen auf, die in einem Aufnahmeraum eines Trägerbauteils untergebracht sind, beispielsweise in der Instrumententafel eines Kraftfahrzeuges. Der Aufnahmeraum ist durch eine Abdeckung abgedeckt, die als ein Formteil zusammen mit dem Trägerbauteil hergestellt werden kann. Die Abdeckung und das Trägerbauteil, beispielsweise ein Träger einer Instrumententafel, sind miteinander verbunden, wobei zwischen der Abdeckung und dem Trägerbauteil Sollbruchstellen ausgebildet sind. Bei Auslösen des Airbags bricht die Verbindung von Trägerbauteil und Abdeckung im Bereich der Sollbruchstellen, so dass sich die Abdeckung zumindest teilweise von dem Trägerbauteil löst und den Aufnahmeraum freigibt.

Derartige Airbag-Anordnungen sind beispielsweise im Lenkrad eines Kraftfahrzeuges und, auf der Beifahrerseite, in die Instrumententafel eingebaut. Es ist auch bekannt, in den Türen Airbag-Einrichtungen als Seitenaufprallschutz einzubauen. All die bekannten Airbag-Anordnungen sind durch Abdeckungen aus Kunststoff oder umschäumten Metallteilen, die allgemein als Formteil bezeichnet werden, abgedeckt, wobei diese Abdeckungen mit Sollbruchstellen versehen sind, die bei einer Airbagauslösung aufbrechen und ein einwandfreies Austreten des Aufprallpolsters, das unter der Abdeckung liegt, gewährleisten. Die Sollbruchstellen sind so bemessen, dass ein definiertes Reißverhalten bei einer vorbestimmten Reißkraft erzielt wird.

Ferner ist es üblich, die Instrumententafel und andere Teile der Innenverkleidung eines Kraftfahrzeuges mit einem Deckmaterial zu überdecken, beispielsweise einer Sichtbedeckung aus echtem Leder oder Kunstleder, Kunststofffolien, -häuten und dergleichen. Dieses Deckmaterial überspannt sowohl das Trägerbauteil als auch die Abdeckung.

Um ein einwandfreies Funktionieren der Airbag-Anordnung und insbesondere ein definiertes Aufreißen der Abdeckung zu gewährleisten, ist es im Stand der Technik üblich, das Deckmaterial im Bereich der Sollbruchstellen mit einer Reißlinie oder Reißnähten zu versehen. Hierzu ist es aus dem Stand der Technik bekannt, Lederbedeckungen aus mehreren Teilen zusammenzusetzen, die im Bereich der Sollbruchstellen der Abdeckung zusammengenäht sind. In Abhängigkeit von der Soll-Reißkraft wird die Stichlänge, die Stärke und das Material des Fadens gewählt, damit bei einer genau definierten Reißkraft die Naht reißt und das einwandfreie Austreten des Aufprallpolsters gewährleistet wird. Hierbei ist es notwendig, dass die Naht genau über den Sollbruchstellen zwischen dem Formteil und der Abdeckung zu liegen kommt.

Des Weiteren ist es aus dem Stand der Technik bekannt, das Deckmaterial im Bereich der Sollbruchstellen zwischen dem Trägerbauteil und der Abdeckung durch Einschneiden oder Einkerben zu schwächen oder auf eine andere Art im Bereich der Sollbruchstellen eine Reduzierung der Materialdicke des Deckmaterials zu erzeugen. Beispielsweise wurde vorgeschlagen, ein Deckmaterial aus Leder, Kunstleder oder Kunststofffolie vorzusehen, bei dem eine partielle Reduzierung der Materialdicke des Deckmaterials im Bereich der Sollbruchstellen durch Abschneiden von Material hergestellt wird.

Die Lösungen des Standes der Technik erfordern alle eine Bearbeitung und/oder Anpassung des Deckmaterials, um die Reißfestigkeit des Deckmaterials im Bereich der Sollbruchstellen zu verringern und ein definiertes Aufreißen des Deckmaterials beim Lösen der Abdeckung von dem Trägerbauteil zu erreichen. Des Weiteren ist es notwendig, das Deckmaterial präzise so über dem Trägerbauteil zu positionieren, dass die Schwächungsstellen über den Sollbruchstellen zu liegen kommen.

Die Dokumente DE 197 38493 A1 und US 6 942 243 B2 zeigen Airbag-Abdeckungen, die an ihrem Rand eine Art umlaufendes Schneidmesser aufweisen, das von der Airbag-Abdeckung nach oben in Richtung des Deckmaterials vorsteht und beim Auslösen des Airbags in das Deckmaterial einschneidet.
Die US 5 466 000 zeigt eine Airbag-Abdeckung mit einer Schneidkante, wobei der gesamte Rand der Airbag-Abdeckung Zähne aufweist, die in einem Winkel von 90 Grad von der Airbag-Abdeckung nach oben vorstehen und in das Deckmaterial einschneiden.

Die US 5 375 875 zeigt eine Airbag-Abdeckung mit einzelnen Schneidspitzen, die ebenfalls von der Airbag-Abdeckung nach oben abstehen, um in das Deckmaterial einzuschneiden.

Die EP 0 788 938 A2 offenbart eine Airbag-Abdeckung mit Schneidhilfen, die sich von dem Rand des Deckelbauteils erstrecken.

Die zuletzt beschriebenen Airbag-Abdeckungen weisen somit separate Schneidhilfen auf, die von der Abdeckung in einem Winkel nach oben, in Richtung des Deckmaterials vorstehen. Diese Schneidhilfen erfordern einen zusätzlichen Herstellungsschnitt und bergen die Gefahr von Verletzungen, wenn ein Passagier mit dem Kopf oder einem anderen Körperteil gegen die Airbag-Abdeckung aufprallt. Die Schneidhilfen würden bei einem Kopfaufschlag in die Stirn des Passagiers eingestanzt.

Ausgehend von diesem Stand der Technik ist es eine Aufgabe der Erfindung, eine Airbag-Anordnung anzugeben, die ein definiertes Aufreißverhalten sowohl der Abdeckung des Airbag-Aufprallposters als auch des darüber liegenden Deckmaterials mit geringerem Aufwand als bei den Lösungen des Standes der Technik erreichen kann. Ferner darf die Airbag-Abdeckung kein zusätzliches Verletzungsrisiko erzeugen.

Diese Aufgabe wird durch eine Airbag-Anordnung mit den Merkmalen von Patentanspruch 1 sowie durch ein Verfahren zur Herstellung einer Airbag-Anordnung gemäß Patentanspruch 12 gelöst.

Die Erfindung sieht eine Airbag-Anordnung vor, insbesondere zur Verwendung in einem Kraftfahrzeug, mit einem Trägerbauteil mit integriertem Deckelbauteil. Das Deckelbauteil deckt in geschlossener Stellung einen Aufnahmeraum für ein Airbag-Aufprallpolster ab und löst sich bei Auslösung des Airbags zumindest teilweise von dem Trägerbauteil, um den Aufnahmeraum freizugeben. Das Deckelbauteil und das Trägerbauteil sind mit einem Deckmaterial überdeckt. Erfindungsgemäß ist an dem Rand des Deckelbauteils wenigstens ein Zahn ausgebildet, der sich von dem Rand des Deckelbauteils in dessen Ebene erstreckt und der beim Lösen des Deckelbauteils von dem Trägerbauteil das Deckmaterial einreißt.

Dieser wenigstens eine Zahn wird erfindungsgemäß vorzugsweise entlang einer Sollbruchlinie freigeschnitten, welche zwischen dem Deckelbauteil und dem Trägerbauteil ausgebildet wird. Die Erfindung schafft somit eine Schneidhilfe, für die kein Extrabauteil und kein gesonderter Fertigungsschritt erforderlich ist, sondern diese Schneidhilfe entsteht bei der Ausbildung der Sollbruchlinie oder Aufreißnaht zwischen Trägerbauteil und Deckelbauteil quasi als "Nebenprodukt". Ferner hat die Erfindung den großen Vorteil, dass der oder die Zähne in der Richtung der Ebene des Trägers orientiert sind und nicht in Richtung des Deckmaterials, welches aufgerissen werden soll, vorstehen. Dadurch können Verletzungen aufgrund vorstehender Schneidhilfen vermieden werden.

Die Zähne entlang des Randes des Deckelbauteils werden so ausgebildet, dass sie beim Lösen des Deckelbauteils von dem Trägerbauteil das Deckmaterial definiert einreißen, ohne dass das Deckmaterial im Bereich der Sollbruchlinie eine Strukturschwächung aufweisen müsste. Erfindungsgemäß weist die Abdeckung des Airbag-Aufprallpolsters somit nach dem Aufreißen der Abdeckung entlang der Sollbruchlinie einen oder mehrere von ihrem Rand vorstehende Zähne auf, die beim Herausdrücken der Abdeckung in das Deckmaterial eindringen und an vorbestimmten Punkten einen oder mehrere Initialrisse erzeugen, die zu einem definierten Aufreißen des Deckmaterials führen. Eine Vorabschwächung des Deckmaterials durch Einschneiden oder dergleichen ist nicht notwendig.

In der bevorzugten Ausführung der Erfindung ist das Deckelbauteil mit dem Trägerbauteil an einem Rand über ein Scharnierelement verbunden, beispielsweise ein Filmscharnier oder ein flexibles Halteband aus einem Gewebe, und der Zahn oder die Zähne sind in dem Bereich des dem Scharnierelement gegenüberliegenden Randes des Deckelbauteils ausgebildet, wobei die Zähne vorzugsweise entlang dieses Randes und/oder im Bereich der Ecken des dem Scharnierelement gegenüberliegenden Randes des Deckelbauteils vorgesehen sind. Zähne können auch an den Seitenrändern des Deckelbauteils vorgesehen sein. Durch diese Anordnung des Zahns bzw. der Zähne wird sichergestellt, dass sich das Deckelbauteil bei Auslösen des Air-bags definiert von dem Trägerbauteil trennt und kontrolliert den Raum für das Aufprallpolster freigibt, wobei eine definierte Reißlinie an dem dem Scharnier gegenüberliegenden Rand und den Seiten des Deckelbauteils erzeugt werden kann.

Die Zähne können die Form von im Wesentlichen dreieckigen oder trapezförmigen Vorsprüngen haben. Sie sollten wenigstens eine von dem Rand des Deckelbauteils vorstehende Spitze aufweisen. Es ist auch möglich, eine Reihe von kleinen Zähnen nebeneinander nach Art eines Wellenschliffs einer Messerklinge vorzusehen. Bei der Erfindung ist wenigstens ein Zahn unterschnittig ausgebildet, wobei seine Schneidkante mit der Oberfläche des Trägerbauteils einen Winkel ≠ 90° einschließt. Dies bedeutet nicht, dass die Zähne aus der Ebene des Deckelbauteils vorstehen, sondern dass die Schneidkanten der Zähne beispielsweise abgeschrägt sind. In der Praxis kann dies realisiert werden, indem die Sollbruchlinie nicht senkrecht sondern schräg zur Oberfläche des Trägerbauteils in dieses eingeschnitten wird. Dadurch kann die Schneidfähigkeit der Zähne optimiert werden.

Grundsätzlich können die Zähne jede Form haben, die geeignet ist, beim Aufreißen des Deckelbauteils entlang der Sollbruchlinie in dem Deckmaterial Initialrisse zu erzeugen, die zu einem definierten Aufreißen des Deckmaterials führen. Auch verschiedene, unterschiedlich geformte Zähne können vorgesehen werden. Die Zähen sind daher nicht auf die dargestellten Formen festgelegt. Die Sollbruchlinie sollte so ausgebildet sein, dass die Zahnspitzen vollständig freiliegen.

Die Anzahl, Anordnung und Form der Zähne hängt ab von der Größe des Deckelbauteils und den gewählten Materialien und Materialstärken sowohl des Trägerbauteils und des Deckelbauteils als auch des Deckmaterials. Erfindungsgemäß wird wenigstens ein Zahn vorgesehen. In einer Ausführung der Erfindung können an dem Rand des Deckelbauteils drei bis elf Zähne ausgebildet sein, wobei wenigstens in der Mitte und/oder an jeder Ecke des dem Scharnierelement gegenüberliegenden Randes des Deckelbauteils ein Zahn vorgesehen ist. Vorzugsweise sind an den beiden Ecken jeweils zwei, drei oder vier Zähne und im Bereich zwischen den beiden Ecken ein, zwei oder drei Zähne ausgebildet.

In einer bevorzugten Ausführung der Erfindung sind das Deckelbauteil und das Trägerbauteil einteilig als Spritzgussteile ausgebildet, wobei die Sollbruchlinie durch Laserschneiden oder Wasserstrahlschneiden hergestellt wird. Es ist auch denkbar, die Sollbruchlinie bei der Herstellung des Trägerbauteils in dieses einzuformen.

Die Erfindung ist im Folgenden anhand einer beispielhaften Ausführung in Bezug auf die Zeichnungen erläutert. In den Figuren zeigen:
- Fig. 1: eine isometrische Darstellung einer Instrumententafel mit einer Airbag-Anordnung gemäß der Erfindung;
- Fig. 2: eine Schnittdarstellung durch die Instrumententafel der Figur 1 entlang der Linie A-A, wobei der Schnitt durch die erfindungsgemäße Airbag-Anordnung hindurchgeht;
- Fig. 3: eine Detailansicht (Detail B) der Schnittdarstellung der Fig. 2;
- Fig. 4: eine schematische Draufsicht (Ansicht C) auf ein Deckelbauteil einer Airbag- Anordnung zur Erläuterung des Verlaufs der Sollbruchlinie gemäß der Erfindung;
- Fig. 5: eine Detaildarstellung (Ansicht D) der Zähne, die an der Außenkante des Deckelbauteils ausgebildet sind; und
- Fig. 6: eine schematische Draufsicht auf einen Ausschnitt eines Trägerbauteils mit integriertem Deckelbauteil gemäß der Erfindung.

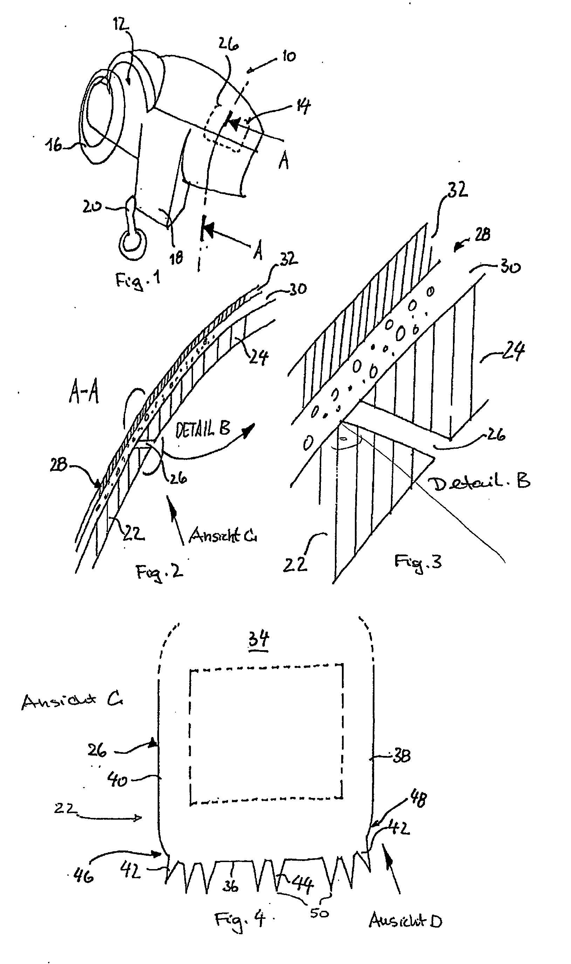

Fig. 1 zeigt eine isometrische Darstellung einer Instrumententafel 10 eines Kraftfahrzeuges mit einem Bereich für Anzeigeinstrumente 12 auf der Fahrerseite und einem Bereich für einen Airbag 14 als Frontalaufpralischutz auf der Beifahrerseite. Der Bereich für den Airbag 14 weist einen Aufnahmeraum für das Airbag-Aufprallpolster, Betriebseinrichtungen des Airbags und eine Abdeckung des Aufnahmeraums auf, welche in Fig. 1 nicht im Einzelnen gezeigt sind. Die Ankopplung eines Aufnahmeraums für ein Airbag-Aufprallpolster und die zugehörigen Betriebseinrichtungen unterhalb der Instrumententafel ist aus dem Stand der Technik grundsätzlich bekannt und beispielsweise in folgenden Veröffentlichungen gezeigt: DE 298 11 739 U1 ; DE 100 32 104 A1; DE 102 53 185 A1; und DE 10 2006 008 564 A1. Die Instrumententafel ist in der Regel mit einem ein- oder mehrteiligen Trägerbauteil 24 aufgebaut, das die Kontur der Instrumententafel 10 vorgibt und in welches die verschiedenen An-zeige- und Bediengeräte sowie ein Airbag-Modul integriert werden können. Das Airbag-Modul besteht aus dem Airbag-Aufprallpolster sowie Betriebseinrichtungen, beispielsweise einem Heiß- oder Kaltgasgenerator, einem Beschleunigungssensor, einer Auslöseeinheit etc. Der Aufnahmeraum für das Airbag-Aufprallpolster ist unterhalb des Bereichs 14 angeordnet und durch ein Deckelbauteil 22 abgedeckt. Das Deckelbauteil 22 und das Trägerbauteil 24 werden in der bevorzugten Ausführung der Erfindung aus einem einheitlichen Formteil gebildet, beispielsweise mittels Spritzgießen von Kunststoff oder Formen eines Plattenmaterials oder Pressen eines Faser- oder Kunststoffmaterials.

Das Formteil, welches das Trägerbauteil 24 und das Deckelbauteil 22 bildet, kann aus einer Naturfaser oder einem Kunststoff und grundsätzlicher aus Thermoplasten oder Duroplasten oder einer Kombination aus Thermo- und Duroplasten sowie Faser, hergestellt werden.

Während der Herstellung dieses Formteils oder in einem nachfolgenden Bearbeitungsschritt, wird zwischen dem Deckelbauteil 22 und dem Trägerbauteil 24 eine Sollbruchlinie 26 ausgebildet, die ein definiertes Aufreißen des Deckelbauteils 22 bei Auslösen des Airbag-Aufprallpolsters unter dem Deckelbauteil 22 gewährleistet. Die Sollbruchlinie kann beispielsweise durch Laserschneiden oder Wasserstrahlschneiden gebildet werden. Dies ist im Folgenden mit weiteren Einzelheiten beschrieben.

In Fig. 1 sind ferner ein Lenkrad 16, eine Mittelkonsole 18 und ein Schalthebel 20 schematisch angedeutet.

Wie in den Fig. 2 und 3 gezeigt, sind das Trägerbauteil 24 der Instrumententafel und das Deckelbauteil 22 mit einem Deckmaterial 28 überdeckt, das in der gezeigten Ausführung zweilagig mit einer weichen Schaumschicht 30 und einer Dekorschicht 32 aufgebaut ist. Die Schaumschicht 30 kann beispielsweise einen PU-Schaum enthalten, und die Dekorschicht 32 kann aus einem Leder, Kunstleder, einer Kunststofffolie, einer Slush-Haut oder dergleichen hergestellt sein.

Wie aus den Figuren zu erkennen ist, ist das Deckmaterial 28 im Bereich der Sollbruchlinie 26 nicht modifiziert und weist insbesondere keine Schwächung im Bereich der Sollbruchlinie 26 auf. Das Deckmaterial 30 wird auf das Trägerbauteil 24 und das Deckelbauteil 22 z.B. aufkaschiert.

Das Deckelbauteil 22 ist gegenüber dem Trägerbauteil 24 durch die Sollbruchlinie 26 abgegrenzt, welche in Fig. 4 schematisch dargestellt ist. Die Sollbruchlinie 26 ist so ausgebildet, dass das Deckelteil 22 mit dem Trägerbauteil 24 über einen Scharnierbereich 34 dauerhaft verbunden ist. Dieser Scharnierbereich 34 kann einfach durch einen nahtlosen Übergang von dem Deckelbauteil 22 zu dem Trägerbauteil 24 gebildet sein oder ein Filmscharnier umfassen, das durch eine Materialdickenreduzierung zwischen einem Längsrand des Deckelbauteils 22 und dem Trägerbauteil 24 gebildet ist. Er kann ein Scharnier auf der Grundlage eines eingebetteten Gewebebandes oder eine andere Art von Scharnier, das ein Aufspringen des Deckelbauteils 22 bei Auslösen des Airbags erlaubt, aufweisen.

An dem dem Scharnierbereich gegenüberliegenden Längsrad 36 sowie an den beiden Seitenrändern 38, 40 ist zwischen dem Deckelbauteil 22 und dem Trägerbauteil 24 die Sollbruchlinie 26 so ausgebildet, dass der Rand des Deckelbauteils 22 Zähne 42, 44 aufweist, die beim Lösen des Deckelbauteils 22 von dem Trägerbauteil 24 das Deckmaterial 38 über dem Deckelbauteil einreißen. Die Zähne 42, 44 sollten jedenfalls an dem dem Scharnierbereich 34 gegenüberliegenden Längsrand 36 des Deckelbauteils 22 und insbesondere in der Mitte des Längsrandes 36 und/oder im Bereich der beiden an den Längsrand 36 angrenzenden Ecken 46, 48 ausgebildet sein. Optional können auch an den Seitenrändern 38, 40 des Deckelbauteils 22 Zähne ausgebildet werden.

In der gezeigten Ausführung weist das Deckelbauteil 22 im Bereich der Ecken 46, 48 jeweils drei Zähne 42 und entlang des zwischen den Ecken liegenden Längsrandes 36 zwei Zähne 44 auf. Selbstverständlich ist die Erfindung nicht auf die gezeigte Anordnung der Zähne 42, 44 begrenzt, und es können im Bereich der Ecken 48, 46 ein, zwei, drei, vier, fünf Zähne oder eine Anzahl von Zähnen 42 vorgesehen sein, während an dem dazwischen liegenden Längsrand 36 ein, zwei, drei, vier Zähne oder eine andere Anzahl von Zähnen vorgesehen sein kann. Auch ein Deckelbauteil 22 mit nur einem Zahn, z.B. im mittleren Bereich des Längsrandes 36, liegt im Bereich der Erfindung.

In der gezeigten Ausführung sind die Zähne als dreieckige Vorsprünge ausgebildet, sie können jedoch auch trapezförmig, parabolisch oder hyperbolisch, gegabelt oder anders geformt sein, wobei vorzugsweise jeder Zahn wenigstens eine von dem Rand 36, 38, 40 des Deckelbauteils 22 vorstehende Spitze aufweist. Es ist auch möglich, an dem Rand 36, 38, 40 des Deckelbauteils eine Riffelung nach Art eines Wellenschliffs vorzusehen.

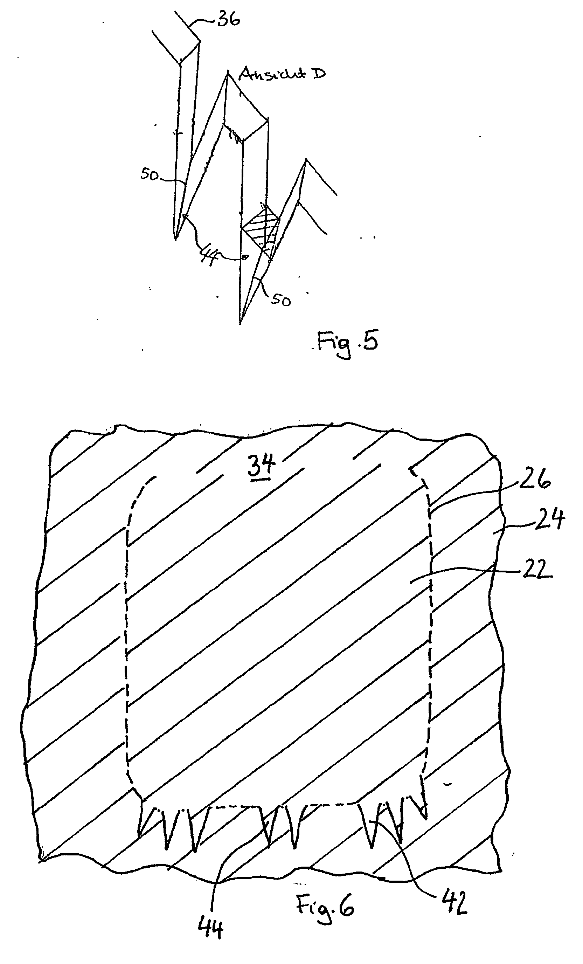

Bei der Erfindung, die in Fig. 5 visualisiert ist, sind die Zähne 44 und/oder 42 hinterschnittig ausgebildet, so dass ihre Schneidkanten 50 mit der Oberfläche des Deckelbauteils 22 einen Winkel einschließen, der von 90° abweicht. Auch die Seitenflächen der Zähne sind geneigt, so dass sich ein trapezförmiger Querschnitt der Zähne ergibt, der in Fig. 5 für einen der Zähne 44 mittels Schraffur angedeutet ist. Die Neigung der Schneidkanten 50 und gegebenenfalls der Seitenfläche der Zähne 44 und/oder 42 gegenüber der Oberfläche des Deckelbauteils 22 liegt in einem Winkel zwischen 0° und 90°, vorzugsweise zwischen 30° und 60°, beispielsweise bei ungefähr 30°, 40°, 45°, 50° oder 60°.

Durch die Neigung der Schnittkante 50 und gegebenenfalls der Seitenflächen der Zähne wird eine Zahnspitze definiert, die ein präzises Einschneiden in das Deckmaterial und somit einen definierten Initialriss in dem Deckmaterial bei Auslösen des Airbags erzielen kann. Erfindungsgemäß können sämtliche oder einige der Zähne 42, 44 mit den gezeigten schrägen Schneidkanten 50 ausgebildet werden, indem die Sollbruchlinie zur Abgrenzung des Deckelbauteils 22 entsprechend schräg in das Trägerbauteil geschnitten wird, wie in den Fig. 2 und 3 angedeutet.

Die genaue Gestalt, Anzahl und Anordnung der Zähne 42, 44 wird abhängig sein von den Abmessungen des Deckelbauteils 22 und den verwendeten Materialien und Materialstärken von sowohl des Deckelbauteils 22 und des Trägerbauteils 24 als auch des Deckmaterials 28.

Die Sollbruchlinie 26 wird in einer bevorzugten Ausführung der Erfindung durch nachträgliche Bearbeitung eines das Trägerbauteil 24 und das Deckelbauteil 22 bildenden Formteils, z.B. durch Laserschneiden, hergestellt. Anstelle eines Lasers kann zur Bearbeitung des Formteils beispielsweise auch ein Messer oder ein Wasserstrahl zum Schneiden der Sollbruchlinie 26 verwendet werden. Die Sollbruchlinie 26 wird hergestellt, bevor das Deckmaterial 28 auf das Trägerbauteil 24 und das Deckelbauteil 22 aufgebracht wird. Sofern die Zähne hinterschnittig ausgebildet werden sollen, kann das Schneidwerkzeug mit entsprechendem Winkel zur Oberfläche des Formteils angesetzt werden.

Die Sollbruchlinie 26, die in der Figur 4 als eine durchgezogene Linie dargestellt ist, besteht in der Praxis aus einer Reihe voneinander beabstandeter kleiner Schnitte oder Punkte, wobei jeweils ein Zahn 42, 44 wenigstens teilweise, vorzugsweise vollständig freigeschnitten ist. Der Abstand der einzelnen Schnitte oder Perforationspunkte ist wiederum abhängig von den oben genannten Parametern: Größe des Deckelbauteils, Material und Materialstärke.

Fig. 6 zeigt eine schematische Draufsicht auf ein Trägerbauteil 24 mit integriertem Deckelbauteil 22 gemäß der Erfindung. Das Deckelbauteil 22 ist von dem Trägerbauteil 24 durch die Sollbruchlinie 26 abgegrenzt, die aus einer Anzahl beabstandeter einzelner Schnitte oder Perforationspunkte hergestellt werden kann. Dabei werden die Zähne 42, 44 durch die Sollbruchlinie 26 im Wesentlichen vollständig freigeschnitten. Abweichend von der Darstellung in Fig. 4 können die Zähne 42, 44 in ihrem Fußbereich nicht freigeschnitten oder auch weitergehend freigeschnitten sein. So ist es möglich, jeweils eng beieinander stehende Zähne mittels einer einzigen durchgehenden Schnittlinie freizuschneiden. Die genaue Ausbildung der Sollbruchlinie 26 ist abhängig von den verwendeten Materialien und Anforderungen.
In Fig. 6 ist durch die versetzte gleiche Schraffur angedeutet, dass das Trägerbauteil 24 in das Deckelbauteil 22 aus ein und demselben Formteil gebildet sind, wobei sie durch die Sollbruchlinie 26 voneinander abgegrenzt werden. Der Schraffurversatz soll die beiden Bauteile sowie den Scharnierbereich 34 besser kenntlich machen.

Wie eingangs erläutert, werden die Zähne 42, 44 an dem Deckelbauteil 22 so angeordnet und so geformt, dass beim Aufreißen der Sollbruchlinie 26 und dem Herausdrücken des Deckelbauteils 22 beim Auslösen des Airbags, die Spitzen der Zähne 42, 44 in dem Deckelmaterial 28 Initialrisse erzeugen, die ein definiertes Aufreißen des Deckmaterials 28, der Sollbruchlinie 26 folgend, erzeugen. Eine Schwächung oder sonstige Bearbeitung des Deckmaterials 28 im Hinblick auf das Reißverhalten bei Auslösen des Airbags ist nicht notwendig, kann jedoch zusätzlich vorgesehen werden.

### Bezugszeichenliste

- 10: Instrumententafel
- 12: Bereich für Anzeigeinstrumente
- 14: Bereich für Airbag
- 16: Lenkrad
- 18: Mittelkonsole
- 20: Schalthebel
- 22: Deckelbauteil
- 24: Trägerbauteil
- 26: Sollbruchlinie
- 28: Deckmaterial
- 30: Schaumschicht
- 32: Dekorschicht
- 34: Scharnierbereich
- 36: Längsrand
- 38, 40: Seitenränder
- 42, 44: Zähne
- 46, 48: Ecken
- 50: Schneidkanten

## Patentansprüche

1. Airbag-Anordnung, insbesondere zur Verwendung in einem Kraftfahrzeug, mit einem Trägerbauteil (24) mit integriertem Deckelbauteil (22), das in geschlossener Stellung einen Aufnahmeraum für ein Airbag-Aufprallpolster abdeckt und sich bei Auslösen des Airbags von dem Trägerbauteil (24) zumindest teilweise löst und den Aufnahmeraum freigibt, wobei das Deckelbauteil (22) und das Trägerbauteil (24) mit einem Deckmaterial (28) überdeckt sind und wobei an dem Rand des Deckelbauteils (22) wenigstens ein Zahn ausgebildet ist, der beim Lösen des Deckelbauteils (22) von dem Trägerbauteil (24) das Deckmaterial (28) einreißt, **dadurch gekennzeichnet, dass** der Zahn sich in der Ebene des Deckelbauteils von dem Rand des Deckelbauteils erstreckt und abgeschrägte Schneidkanten (50) aufweist, die gegenüber der Oberfläche des Trägerbauteils um einen Winkel ungleich 90° geneigt sind.

2. Airbag-Anordnung nach Anspruch 1, **dadurch gekennzeichnet, dass** zwischen dem Deckelbauteil und dem Trägerbauteil eine Sollbruchlinie ausgebildet und entlang der Sollbruchlinie der wenigstens eine Zahn zumindest teilweise freigeschnitten ist.

3. Airbag-Anordnung nach Anspruch 1 oder 2, **dadurch gekennzeichnet, dass** das Deckelbauteil (22) mit dem Trägerbauteil (24) an einem Rand über eine Scharnierelement (34) verbunden ist und dass der Zahn (42, 44) im Bereich des dem Scharnierelement (34) gegenüberliegenden Randes (36) des Deckelbauteils (22) ausgebildet sind.

4. Airbag-Anordnung nach Anspruch 3, **dadurch gekennzeichnet, dass** in der Mitte und/oder im Bereich der Ecken (46, 48) des dem Scharnierelement gegenüberliegenden Randes (36) des Deckelbauteils (22) ein Zahn oder mehrere Zähne ausgebildet sind.

5. Airbag-Anordnung nach einem der vorangehenden Ansprüche, **dadurch gekennzeichnet, dass** die Zähne (42, 44) in Form von im Wesentlichen dreieckigen oder trapezförmigen Vorsprüngen ausgebildet sind.

6. Airbag-Anordnung nach einem der vorangehenden Ansprüche, **dadurch gekennzeichnet, dass** die Zähne (42, 44) mit einer oder mehreren von dem Rand (36, 38, 40) des Deckelbauteils vorstehenden Spitze(n) ausgebildet sind.

7. Airbag-Anordnung nach einem der vorangehenden Ansprüche, **dadurch gekennzeichnet, dass** die Sollbruchlinie (26) so geformt ist, dass an dem Rand (36, 38, 40) des Deckelbauteils (22) drei bis elf Zähne (42, 44) ausgebildet sind.

8. Airbag-Anordnung nach Anspruch 3 und einem der vorangehenden Ansprüche,
**dadurch gekennzeichnet, dass** im Bereich der beiden Ecken (46, 48) des dem Scharnierelement (34) gegenüberliegenden Randes (36) des Deckelbauteils (22) jeweils zwei, drei oder vier Zähne (42) ausgebildet sind und/oder
dass zwischen den beiden Ecken (46, 48) ein, zwei oder drei Zähne (44) an dem Rand (36) des Deckelbauteils (22) ausgebildet sind.

9. Airbag-Anordnung nach Anspruch 2 und einem der vorangehenden Ansprüche,
**dadurch gekennzeichnet, dass** zwischen dem Deckelbauteil und dem Trägerbauteil eine Sollbruchlinie ausgebildet ist, die durch Laserschneiden oder Wasserstrahlschneiden hergestellt ist.

10. Airbag-Anordnung nach einem der vorangehenden Ansprüche, **dadurch gekennzeichnet, dass** zwischen dem Deckelbauteil und dem Trägerbauteil eine Sollbruchlinie ausgebildet ist, die so ausgebildet ist, dass die Zähne (42, 44) das Deckmaterial (28) einreißen, ohne dass das Deckmaterial (28) im Bereich der Sollbruchlinie (26) eine Strukturschwächung aufweist.

11. Airbag-Anordnung nach Anspruch 10, **dadurch gekennzeichnet, dass** das Deckmaterial (28) im Bereich der Sollbruchlinie (26) keine Strukturschwächung aufweist.

12. Verfahren zur Herstellung einer Airbag-Anordnung, insbesondere zur Verwendung in einem Kraftfahrzeug, mit einem Trägerbauteil (24) mit integriertem Deckelbauteil (22), das in geschlossener Stellung einen Aufnahmeraum für ein Airbag-Aufprallpolster abdeckt, wobei das Deckelbauteil (22) und das Trägerbauteil (24) mit einem Deckmaterial (28) überdeckt sind, bei dem
zwischen dem Deckelbauteil (22) und dem Trägerbauteil (24) eine Sollbruchlinie (26) gebildet wird, entlang derer sich das Deckelbauteil (22) bei Auslösen des Airbags von dem Trägerbauteil (24) löst, um den Aufnahmeraum freizugeben, **dadurch gekennzeichnet, dass** die Sollbruchlinie (26) so ausgebildet wird, dass an dem Rand des Deckelbauteils (22) durch die Sollbruchlinie wenigstens ein Zahn (42, 44) mit einer schrägen Schneidkante freigeschnitten wird, der beim Lösen des Deckelbauteils (22) von dem Trägerbauteil (24) das Deckmaterial (28) einreißt.

13. Verfahren nach Anspruch 12, **dadurch gekennzeichnet, dass** die Sollbruchlinie (26) durch Laserschneiden oder Wasserstrahlschneiden hergestellt wird.

14. Verfahren nach Anspruch 12 oder 13, **dadurch gekennzeichnet, dass** die Sollbruchlinie (26) so ausgebildet wird, dass der wenigstens eine Zahn (42, 44) das Deckmaterial (28) einreißt, ohne dass das Deckmaterial (28) im Bereich der Sollbruchlinie (26) eine Strukturschwächung aufweist.

## Claims

1. An airbag assembly, in particular for use in a motor vehicle, comprising a carrier component (24) having an integrated lid component (22), which in the closed position covers an accommodation space for an airbag impact cushion and, when the airbag is triggered, at least partially detaches from the carrier component (24) and opens up the accommodation space, wherein the lid component (22) and the carrier component (24) are covered by a covering material (28), and wherein on the edge of the lid component (22) there is formed at least one tooth, which tears the covering material (28) when the lid component (22) is released from the carrier component (24), **characterized in that** the tooth extends in the plane of the lid component from the edge of the lid component and has beveled cutting edges (50) inclined with respect to the surface of the carrier component by an angle unequal to 90°.

2. The airbag assembly according to claim 1, **characterized in that** between the lid component and the carrier component there is formed a predetermined breaking line, and the at least one tooth is at least partially cut free along the predetermined breaking line.

3. The airbag assembly according to claim 1 or claim 2, **characterized in that** the lid component (22) is connected to the carrier component (24) via a hinge element (34) on a edge thereof, and that the tooth (42, 44) is formed in the area of the edge (36) of the lid component (22) lying opposite to the hinge element (34).

4. The airbag assembly according to claim 3, **characterized in that** a tooth or several teeth are formed in the center and/or in the area of the corners (46, 48) of the edge (36) of the lid component (22) lying opposite to the hinge element.

5. The airbag assembly according to one of the preceding claims, **characterized in that** the teeth (42, 44) are formed in the form of substantially triangular or trapezoidal projections.

6. The airbag assembly according to one of the preceding claims, **characterized in that** the teeth (42, 44) are formed with one or more tip(s) protruding from the edge (36, 38, 40) of the lid component.

7. The airbag assembly according to one of the preceding claims, **characterized in that** the predetermined breaking line (26) is shaped such that three to eleven teeth (42, 44) are formed on the edge (36, 38, 40) of the lid component (22).

8. The airbag assembly according to claim 3 and one of the preceding claims, **characterized in that** two, three, or four teeth (42) are each formed in the area of the two corners (46, 48) of the edge (36) of the lid component (22) lying opposite to the hinge element (34) and/or
that between the two corners (46, 48) there are formed one, two, or three teeth (44) on the edge (36) of the lid component (22).

9. The airbag assembly according to claim 2 and one of the preceding claims, **characterized in that** a predetermined breaking line is formed between the lid component and the carrier component, which is produced by laser cutting or water jet cutting.

10. The airbag assembly according to one of the preceding claims, **characterized in that** a predetermined breaking line is formed between the lid component and the carrier component, which is formed such that the teeth (42, 44) tear the covering material (28) without the covering material (28) exhibiting a weakening structure in the area of the predetermined breaking line (26).

11. The airbag assembly according to claim 10, **characterized in that** the covering material (28) does not exhibit a weakening structure in the area of the predetermined breaking line (26).

12. A method for producing an airbag assembly, in particular to be used in a motor vehicle, comprising a carrier component (24) having an integrated lid component (22), which in the closed position covers an accommodation space for an airbag impact cushion, wherein the lid component (22) and the carrier component (24) are covered by a covering material (28), in which
between the lid component (22) and the carrier component (24) there is formed a predetermined breaking line (26), along which the lid component (22) detaches from the carrier component (24) when the airbag is triggered to open up the accommodation space, **characterized in that** the predetermined breaking line (26) is formed such that on the edge of the lid component (22) at least one tooth (42, 44) with an oblique cutting edge is cut free by the predetermined breaking line, which tooth tears the covering material (28) when the lid component (22) detaches from the carrier component (24).

13. The method according to claim 12, **characterized in that** the predetermined breaking line (26) is produced by laser cutting or water jet cutting.

14. The method according to claim 12 or claim 13, **characterized in that** the predetermined breaking line (26) is formed such that the at least one tooth (42, 44) tears the covering material (28) without the covering material (28) exhibiting a weakening structure in the area of the predetermined breaking line (26).

## Revendications

1. Système d'airbag, destiné à être utilisé en particulier dans un véhicule automobile, comportant un élément support (24) avec un couvercle (22) intégré, qui, dans la position fermée, masque un logement pour un coussin de sécurité gonflable en cas de collision et qui, lors du déclenchement de l'airbag, se détache au moins en partie de l'élément support (24) et libère le logement, le couvercle (22) et l'élément support (24) étant recouverts d'un matériau de protection (28) et au moins une dent étant formée sur le bord du couvercle (22), laquelle déchire le matériau de protection (28) au moment où le couvercle (22) se détache de l'élément support (24), **caractérisé en ce que** la dent s'étend dans le plan du couvercle à partir du bord du couvercle et comporte des arêtes de coupe (50), qui sont inclinées par rapport à la surface de l'élément support en formant un angle différent de 90°.

2. Système d'airbag selon la revendication 1, **caractérisé en ce qu'**une ligne destinée à la rupture est réalisée entre le couvercle et l'élément support et ladite au moins une dent est dégagée au moins en partie le long de la ligne destinée à la rupture.

3. Système d'airbag selon la revendication 1 ou 2, **caractérisé en ce que** le couvercle (22) est relié à l'élément support (24) sur un bord par l'intermédiaire d'un charnière (34), et **en ce que** la dent (42, 44) est réalisée sur le couvercle (22), dans la zone du bord (36) en regard de la charnière (34).

4. Système d'airbag selon la revendication 3, **caractérisé en ce qu'**une dent ou plusieurs dents sont réalisées au milieu et/ou dans la zone des coins (46, 48) du couvercle (22) sur le bord (36) en regard de la charnière (34).

5. Système d'airbag selon l'une quelconque des revendications précédentes, **caractérisé en ce que** les dents (42, 44) sont réalisées en forme de saillies sensiblement triangulaires ou trapézoïdales.

6. Système d'airbag selon l'une quelconque des revendications précédentes, **caractérisé en ce que** les dents (42, 44) sont réalisées avec une ou plusieurs pointe(s) en saillie sur le bord (36, 38, 40) du couvercle.

7. Système d'airbag selon l'une quelconque des revendications précédentes, **caractérisé en ce que** la ligne destinée à la rupture (26) est formée de telle sorte que trois à onze dents (42, 44) sont réalisées sur le bord (36, 38, 40) du couvercle (22).

8. Système d'airbag selon la revendication 3 et l'une quelconque des revendications précédentes, **caractérisé en ce que** dans la zone des deux coins (46, 48) du couvercle (22) sur le bord (36) en regard de la charnière (34) sont réalisées respectivement deux, trois ou quatre dents (42), et/ou
**en ce qu'**entre les deux coins (46, 48) une, deux ou trois dents (44) sont réalisées sur le bord (36) du couvercle (22).

9. Système d'airbag selon la revendication 2 et l'une quelconque des revendications précédentes, **caractérisé en ce qu'**entre le couvercle et l'élément support est réalisée une ligne destinée à la rupture, qui est réalisée par découpe au laser ou par coupe au jet d'eau.

10. Système d'airbag selon l'une quelconque des revendications précédentes, **caractérisé en ce qu'**entre le couvercle et l'élément support est réalisée une ligne destinée à la rupture, qui est conçue de telle sorte que les dents (42, 44) déchirent le matériau de protection (28) sans que le matériau de protection (28) possède un affaiblissement de structure dans la zone de la ligne destinée à la rupture (26).

11. Système d'airbag selon la revendication 10, **caractérisé en ce que** le matériau de protection (28) ne possède pas d'affaiblissement de structure dans la zone de la ligne destinée à la rupture (26).

12. Procédé destiné à la réalisation d'un système d'airbag, destiné en particulier à être utilisé dans un véhicule automobile, comportant un élément support (24) avec un couvercle (22) intégré, qui, dans la position fermée, masque un logement pour un coussin de sécurité gonflable en cas de collision, sachant que le couvercle (22) et l'élément support (24) sont recouverts d'un matériau de protection (28), dans lequel
entre le couvercle (22) et l'élément support (24) est formée une ligne destinée à la rupture (26), le long de laquelle le couvercle (22) se détache de l'élément support (24) au moment du déclenchement de l'airbag, afin de libérer le logement, **caractérisé en ce que** la ligne destinée à la rupture (26) est conçue de telle sorte que sur le bord du couvercle (22), la ligne destinée à la rupture dégage au moins une dent (42, 44) avec une arête de coupe inclinée, laquelle déchire le matériau de protection (28) lorsque le couvercle (22) se détache de l'élément support (24).

13. Procédé selon la revendication 12, **caractérisé en ce que** la ligne destinée à la rupture (26) est réalisée par découpe au laser ou par coupe au jet d'eau.

14. Procédé selon la revendication 12 ou 13, **caractérisé en ce que** la ligne destinée à la rupture (26) est réalisées de telle sorte que ladite au moins une dent (42, 44) déchire le matériau de protection (28) sans que le matériau de protection (28) possède un affaiblissement de structure dans la zone de la ligne destinée à la rupture (26).
